# EUROPEAN PATENT APPLICATION

(11) **EP 4 293 573 A1**
(43) Date of publication of application: **20.12.2023**
(21) Application number: 23154375.2
(22) Date of filing: 01.02.2023
(51) Int. Cl.: G06N 3/045, G06N 3/09

(54) **DATA PREDICTING METHOD AND APPARATUS**

(30) Priority: 16.06.2022 US 202263352644 P; 03.10.2022 TW 111137595
(71) Applicant: Wistron Corporation, New Taipei City 22181 (TW)
(72) Inventor: HO, Yu-Hsuan, New Taipei City 22181 (TW); HUANG, Yu-Wen, New Taipei City 22181 (TW)
(74) Representative: Becker, Eberhard

(57) **Abstract**

A data predicting method and apparatus (10) are provided. In the method, distances between a predicting data and multiple data groups are determined. A first machine learning model corresponding the data group having the shortest distance with the predicting data is selected from multiple machine learning models. The predicting data is predicted through the first machine learning model. Those machine learning models are trained by using different data groups, respectively.

## Description

### TECHNICAL FIELD

The disclosure relates to a data predicting technology, and in particular relates to a data predicting method and apparatus for machine learning.

### BACKGROUND

Machine learning algorithms may make predictions about unknown data by analyzing large amounts of data to infer patterns in the data. In recent years, machine learning has been widely used in image recognition, natural language processing, outcome prediction, medical diagnosis, error detection, or speech recognition.

### SUMMARY

In view of this, embodiments of the disclosure provide a data predicting method and apparatus, which may predict data through clustering to improve prediction accuracy.

The data predicting method of the embodiment of the disclosure is suitable for machine learning, and the data predicting method includes (but is not limited to) the following operation. Distances between predicting data and multiple data groups are determined. A machine learning model corresponding to one of the data groups having a shortest distance with the predicting data is selected from multiple machine learning models. A first machine learning model is used to predict the predicting data. The machine learning models are respectively trained using different data groups.

The data predicting apparatus of the embodiment of the disclosure includes (but is not limited to) a memory and a processor. The memory is used to store program code. The processor is coupled to the memory. The processor is configured to load the program code to execute the following operation. Distances between predicting data and multiple data groups are determined. A first machine learning model corresponding to one of the data groups having a shortest distance with the predicting data is selected from multiple machine learning models. The first machine learning model is used to predict the predicting data. The machine learning models are respectively trained using different data groups.

Based on the above, according to the data predicting method and apparatus of the embodiments of the disclosure, the first machine learning model corresponding to the data group most similar to the predicting data is searched, and the predicting data is predicted accordingly. Thereby, it facilitates improving the accuracy, sensitivity, and specificity of machine learning.

In order to make the above-mentioned features and advantages of the disclosure comprehensible, embodiments accompanied with drawings are described in detail below.

### BRIEF DESCRIPTION OF THE DRAWING

FIG. 1 is a component block diagram of a data predicting apparatus according to an embodiment of the disclosure.
FIG. 2 is a flowchart of a data predicting method according to an embodiment of the disclosure.
FIG. 3 is a schematic diagram of analysis results according to an embodiment of the disclosure.
FIG. 4 is a distribution diagram of principal components according to an embodiment of the disclosure.
FIG. 5 is a clustering schematic diagram of a hierarchical clustering method according to an embodiment of the disclosure.
FIG. 6 is a schematic diagram of a verification result of respectively training the first group according to an embodiment of the disclosure.
FIG. 7 is a schematic diagram of a verification result of respectively training the second group according to an embodiment of the disclosure.
FIG. 8 is a schematic diagram of a verification result of co-training multiple groups according to an embodiment of the disclosure.
FIG. 9 is a flowchart of data prediction according to an embodiment of the disclosure.

### DETAILED DESCRIPTION OF DISCLOSED EMBODIMENTS

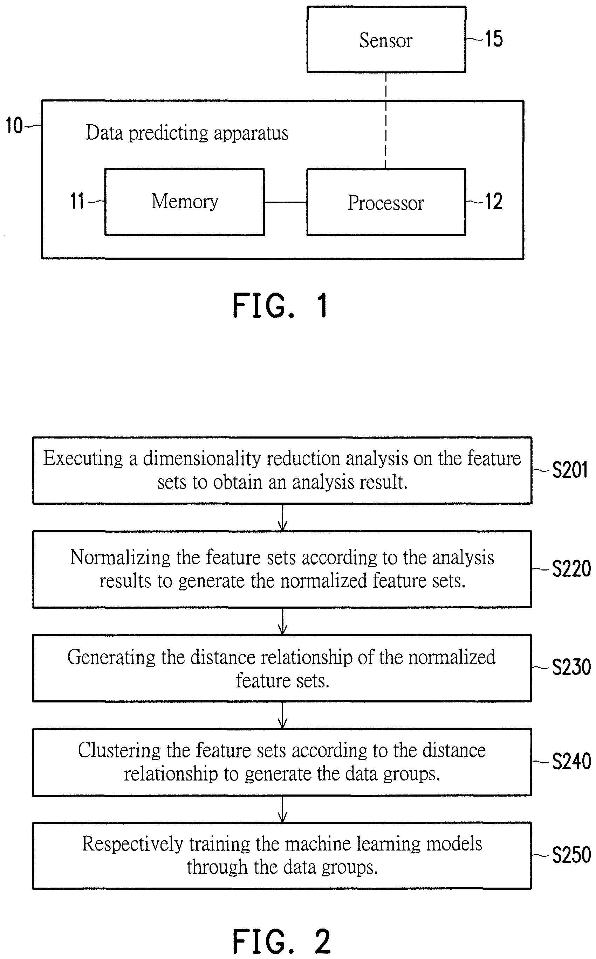

FIG. 1 is a component block diagram of a data predicting apparatus 10 according to an embodiment of the disclosure. Referring to FIG. 1, the data predicting apparatus 10 includes (but is not limited to) a memory 11 and a processor 12. The data predicting apparatus 10 may be a mobile phone, a tablet computer, a notebook computer, a desktop computer, a voice assistant apparatus, a smart home appliance, a wearable apparatus, a vehicle-mounted apparatus, or other electronic apparatuses.

The memory 11 may be any type of fixed or movable random access memory (RAM), read only memory (ROM), flash memory, conventional hard disk drive (HDD), solid-state drive (SSD) or similar components. In one embodiment, the memory 11 is used to store program code, software modules, configuration, data, or files (e.g., data, models, or features), which are described in detail in subsequent embodiments.

The processor 12 is coupled to the memory 11. The processor 12 may be a central processing unit (CPU), a graphics processing unit (GPU), or other programmable general-purpose or special-purpose microprocessors, a digital signal processor (DSP), a programmable controller, a field programmable gate array (FPGA), an application-specific integrated circuit (ASIC), a neural network accelerator, or other similar components, or combinations of components thereof. In one embodiment, the processor 12 is used to execute all or some of the operations of the data predicting apparatus 10, and may load and execute each program code, software module, file, and data stored in the memory 11. In some embodiments, some operations in the method of the embodiments of the disclosure may be implemented by different or the same processor 12.

In one embodiment, the data predicting apparatus 10 further includes a sensor 15. The processor 12 is coupled to the sensor 15. For example, the sensor 15 is connected to the processor 12 via USB, Thunderbolt, Wi-Fi, Bluetooth, or other wired or wireless communication technology. For another example, the data predicting apparatus 10 has a built-in sensor 15. The sensor 15 may be a radar, a microphone, a temperature sensor, a humidity sensor, an image sensor, a motion sensor, or other types of sensors. In one embodiment, the sensor 15 is used for sensing to obtain sensing data. In one embodiment, the sensing data is time-dependent data. That is, data recorded with time sequence, continuous time, or multiple time points. For example, the sensing data is a sensing result (e.g., an in-phase quadrature signal), an audio signal, or a continuous image of a radar.

Hereinafter, the method according to the embodiment of the disclosure is described in conjunction with various apparatuses, components, and modules in the data predicting apparatus 10. Each process of the method may be adjusted according to the implementation, and is not limited to thereto.

FIG. 2 is a flowchart of a data predicting method according to an embodiment of the disclosure. Referring to FIG. 2, the processor 12 executes a dimensionality reduction analysis on multiple feature sets to obtain an analysis result (step S201). Specifically, each feature set includes one or more features. The type of feature may be different depending on the type of sensing data of the sensor 15. Taking the IQ signal of a radar as an example, the feature may be the variance between different channels or the feature may be waveform-related. For another example, the feature may be the zero-crossing rate (ZCR), pitch, or Mel frequency cepstral coefficients (MFCC) in acoustic features.

In one embodiment, the processor 12 may transform multiple sensing data into the feature sets. For example, the IQ signals are transformed into features related to the variance between different channels or the waveform. In another example, the sound signal is transformed into ZCR, pitch, or MFCC.

For example, Table (1) is the IQ sensing data of a radar:

**Table (1)**

| Timestamp | First I data | First Q data | Second I data | Second Q data |
|---|---|---|---|---|
| 1631282553 | 1.543626 | 1.578329 | 1.581603 | 1.57022 |
| 1631282553 | 1.543878 | 1.577775 | 1.575609 | 1.569817 |
| 1631282553 | 1.54831 | 1.576012 | 1.576969 | 1.573594 |
| 1631282554 | 1.54684 | 1.578178 | 1.572234 | 1.580595 |
| 1631282554 | 1.54418 | 1.580092 | 1.576818 | 1.586186 |

The processor 12 may re-shape the sensing data of Table (1) into a matrix form. For example, the matrix is a 300x500 matrix, and its elements are I or Q data.

In another embodiment, the processor 12 may download or receive sensing data of an external sensor or a feature set generated by an external computing apparatus through a communication transceiver (not shown).

Different feature sets may correspond to sensing data of different subjects or different targets. For example, the first feature set is transformed from the sensing data of the first subject, and the second feature set is transformed from the sensing data of the second subject. Alternatively, different feature sets may correspond to sensing data of the same subject or the same target but at different times or in different environments. For example, the third feature set corresponds to the sensing data of the third subject in the first time period, and the fourth feature set corresponds to the sensing data of the third subject in the second time period.

In one embodiment, the processor 12 may mark one or more feature sets. For example, events such as hypopnea, wakefulness, or apnea are marked. However, the marked content may still be different according to the feature type, and the embodiment of the disclosure is not limited.

Dimensionality reduction analysis is used to reduce features. That is, each feature is considered a dimension, and reducing the dimension also reduces the feature. In one embodiment, the dimensionality reduction analysis is principal components analysis (PCA) or principal co-ordinates analysis (PCoA). For PCA, an orthogonal transformation is used to linearly transform observed values (features in this embodiment) of a series of potentially correlated variables, thereby projecting them into a series of linearly uncorrelated variable values. These uncorrelated variables are referred to as principal components. In other words, the principal elements and structures are found from multiple features. Unlike PCA, PCoA is a projection of a distance matrix (recording of the difference/distance between two observed values) of observed values obtained by different distance algorithms. Furthermore, PCoA finds the principal coordinates in the distance matrix.

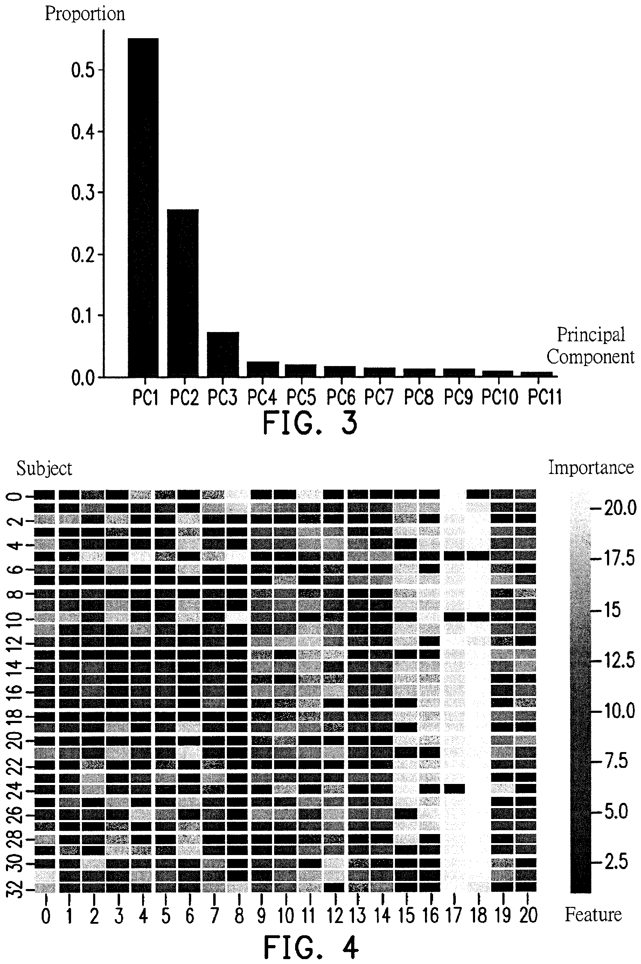

The analysis results may be principal components and their proportions, or principal coordinates and their proportions. The proportion refers to the principal component or principal coordinate. For example, FIG. 3 is a schematic diagram of analysis results according to an embodiment of the disclosure. Referring to FIG. 3, it is assumed that the sensing data is the sleep data sensed through a continuous wave (CW) radar, and the corresponding marked verification data is the data generated by polysomnography (PSG). The target of the comparison is a sleep event such as hypopnea, wakefulness, or apnea. That is, radar is used to predict sleep events. This embodiment was analyzed using data from 32 subjects. After transforming the radar data of 32 subjects into features, PCA/PCoA processing is performed, and the principal component architecture shown in FIG. 3 may be obtained. The analysis results include principal components PC1 to PC 11 and their proportions. The principal component PC1 has the highest proportion.

In other embodiments, the dimensionality reduction analysis may be a linear discriminant analysis (LDA), a t-distributed stochastic neighbor embedding (t-SNE), or other dimensionality reduction. The analysis results include the reduced features or dimensions and their proportions.

Referring to FIG. 2, the processor 12 may normalize the feature sets according to the analysis results to generate multiple normalized feature sets (step S220). Specifically, normalization is to scale the value of the feature, such that the scaled value falls into a specific interval (e.g., [0, 1] or [0, 10]). That is, the value of each feature in the feature set is scaled to be within a specific interval.

In one embodiment, the processor 12 selects one or more first principal components from multiple principal components, and normalizes the feature sets according to the first principal component. For example, the processor 12 sets the maximum value and the minimum value of the interval, and performs normalization to each principal component such that the reference points of each other are consistent.

In one embodiment, the first principal component is the principal component with the highest proportion among the principal components. For example, the proportion of the principal component PC 1 in FIG. 3 is much higher than that of the other principal components PC2 to PC 11, so the principal component PC1 may be selected for subsequent normalization.

In another embodiment, the first principal component is the principal component with the highest proportion or the principal component with the second highest proportion among the principal components. Among all the components, the difference between the principal component with the highest proportion and the principal component with the second highest proportion is less than a threshold value (e.g., the threshold value may be 3%, 5%, or 10%). For example, if the difference between the principal component with the highest proportion and the principal component with the second highest proportion is within 5%, the principal component with the second highest proportion is also taken into consideration to be selected together. If there is a principal component of other proportion ranking that has a difference with the principal component with the highest proportion that is also less than the threshold value, then such principal component is also taken into consideration for subsequent normalization.

In one embodiment, processor 12 may rank the feature sets through a percentile transformation, that is, transforming feature values into rankings. For example, table (2) is a feature set of features:

**Table (2)**

| Feature number | 1 | 2 | 3 | 4 | 5 |
|---|---|---|---|---|---|
| Feature value | 0.000002 | 0.000003 | -4.764e-7 | 0.000018 | -0.000008 |

The transformed ranking of table (2) is table (3).

**Table (3)**

| Feature number | 1 | 2 | 3 | 4 | 5 |
|---|---|---|---|---|---|
| Ranking | 3rd | 2nd | 4th | 1st | 5th |

FIG. 4 is a distribution diagram of principal components according to an embodiment of the disclosure. Referring to FIG. 4, the horizontal axis is the features which are arranged according to the number, and the vertical axis is the number of different subjects. Different subjects have different features. For example, the performance of the 17th and 18th features (i.e., the importance, represented by different gray scales in the figure) of subjects numbered 5 and 10 is different from that of other subjects.

Referring to FIG. 2, the processor 12 generates the distance relationship of the normalized feature sets (step S230). Specifically, the distance relationship includes the distance between two of the normalized feature sets. The processor 12 may project the features in the normalized feature set to the same space and form the coordinates, and calculate the distance in space (i.e., the distance between two coordinates) between the features of different normalized feature sets.

In one embodiment, the distance relationship is a distance matrix, and each element in the distance matrix is the distance between features in the two normalized feature sets. The distance algorithm may be a Euclidean distance, a cosine similarity or a KL divergence (Kullback-Leibler divergence). For example, the first normalized feature set is [1.5, 2.2], the second normalized feature set is [0.1, 1.6], and the third normalized feature set is [5.7,4.3]. The distance matrix is [1.52, 4.7, 6.22], in which taking the Euclidean distance algorithm as an example, the square root of (1.5-0.1)^2+(2.2-1.6)^2 is taken to get 1.52, and so on.

The distance relationship is not limited to a matrix form. In other embodiments, the distance relationship may also be a comparison table, a mathematical conversion formula, or other relationships that record the distances between different feature sets.

Referring to FIG. 2, the processor 12 clusters the feature sets according to the distance relationship to generate multiple data groups (step S240). Specifically, each data group includes one or more feature sets. The similarity between different feature sets may be known from the distance relationship. Clustering is to assign multiple feature sets with high similarity to the same data group. The clustering method may be a k-means clustering, a hierarchical clustering, or a fuzzy clustering method.

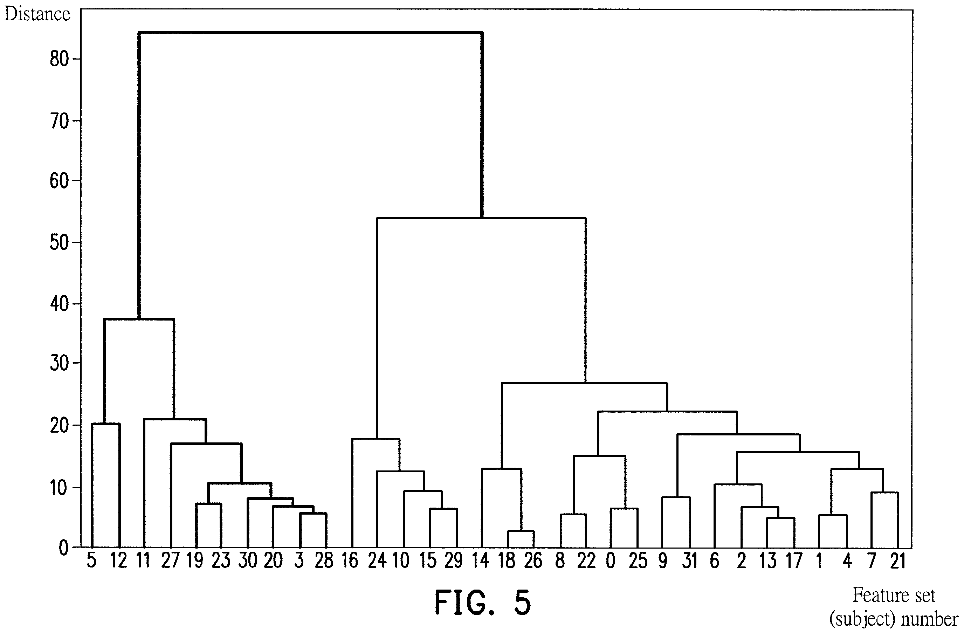

For example, FIG. 5 is a clustering schematic diagram of a hierarchical clustering method according to an embodiment of the disclosure. Referring to FIG. 5, each feature set number corresponds to a feature set (e.g., a subject). The processor 12 uses hierarchical clustering to cluster the closest feature sets into one of the data groups. The feature sets may be split into two groups between the numbers 28 and 16 (e.g., the feature sets corresponding to subjects numbered 16 and 28). It should be noted that the closest refers to the comparison result with the distance threshold value. If the distance between two feature sets is less than the distance threshold value, it is regarded as the closest two feature sets; otherwise, it is regarded as two feature sets that are not close.

In one embodiment, the processor 12 may determine the group number of the data groups, determine the cluster distance according to the group number, and cluster the feature sets according to the cluster distance. Taking FIG. 5 as an example, if the group number is 2, then the cluster distance is 60. The distance between feature sets numbered 5, 12, 11, 27, 19, 23, 30, 3, and 28 (e.g., the feature sets corresponding to subject numbered 5, 12, 11, 27, 19, 23, 30, 3, and 28) is within 60, so they are all assigned to the same data group. If the group number is 3, then the cluster distance is 50. The distances between the feature sets numbered 16, 24, 10, 15, and 29 are within 50, so they are all assigned to the same data group.

Referring to FIG. 2, the processor 12 respectively uses the data groups to train multiple machine learning models (step S250). Specifically, after obtaining the clustering results, each data group may be trained separately from other data groups. The machine learning models are respectively trained using different data groups. The processor 12 may train the corresponding machine learning model using the feature sets corresponding to each data group (i.e., the feature sets transformed from the sensing data) or the untransformed sensing data. For example, the first machine learning model is trained using the feature set of the first data group, and the second machine learning model is trained using the feature set of the second data group. The first data group is not used to train the second machine learning model. In addition, the machine learning algorithm may be deep learning, decision tree, recurrent neural network (RNN), or other algorithms.

The following verification results may prove that the cluster training of the embodiment of the disclosure facilitates the training of machine learning.

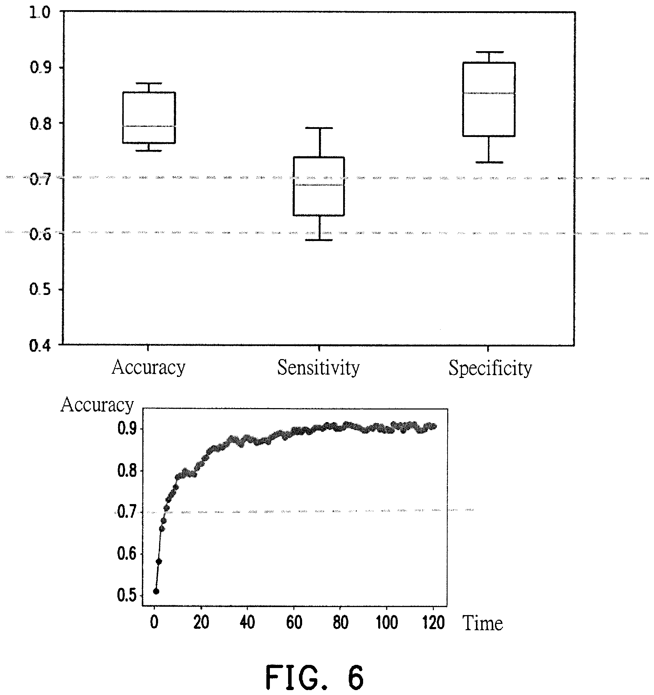

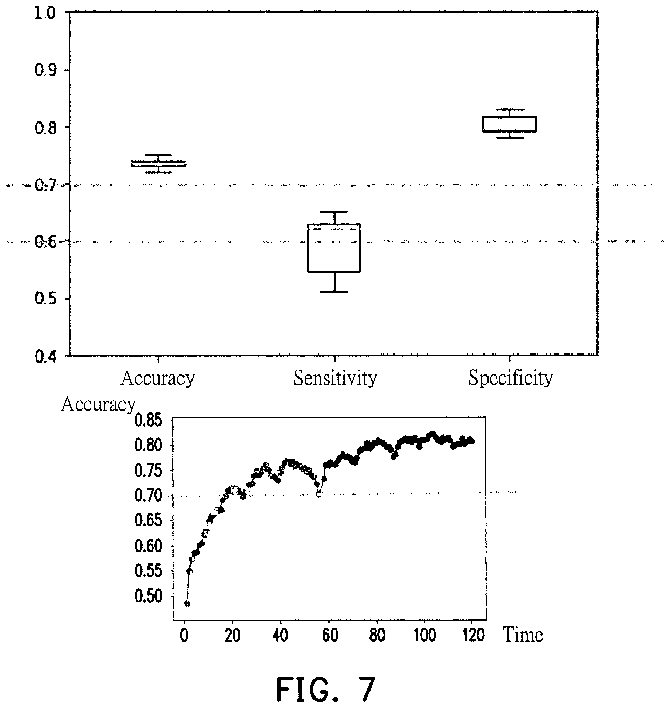

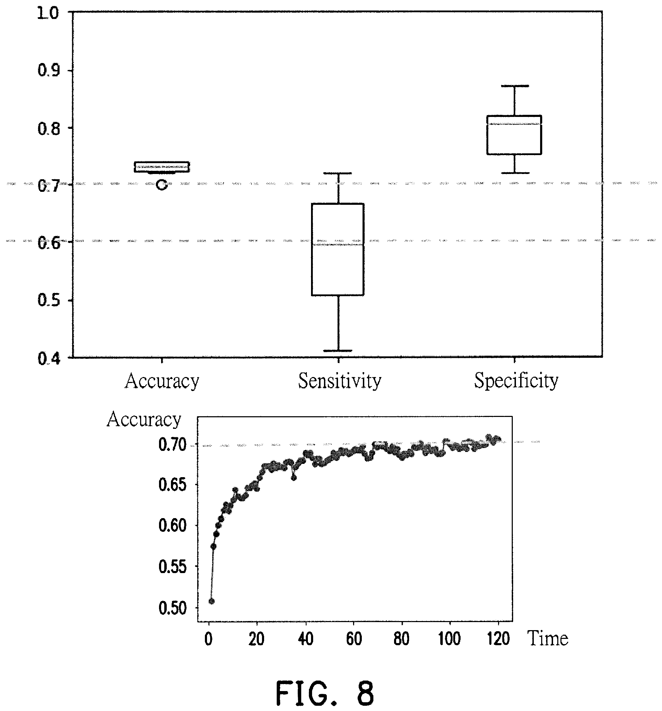

FIG. 6 is a schematic diagram of a verification result of respectively training the first group according to an embodiment of the disclosure. FIG. 7 is a schematic diagram of a verification result of respectively training the second group according to an embodiment of the disclosure. FIG. 8 is a schematic diagram of a verification result of co-training multiple groups according to an embodiment of the disclosure. Referring to FIG. 6, FIG. 7, and FIG. 8, the accuracy is the correct ratio of multiple prediction results obtained by each machine learning model and the actual results. Sensitivity is the ratio of samples that are determined to be positive among the samples that are actually positive. Specificity is the ratio of samples that are determined to be negative among the samples that are actually negative.

FIG. 6 is the verification result trained using the feature sets numbered 5, 12, 11, 27, 19, 23, 30, 3, and 28 in FIG. 5 (e.g., feature sets or raw sensing data corresponding to subject numbered 5, 12, 11,27, 19, 23, 30, 3, and 28). FIG. 7 is the verification result trained using the other feature sets in FIG. 5 (e.g., feature sets or raw sensing data corresponding to subjects other than subject numbered 5, 12, 11, 27, 19, 23, 30, 3, and 28). FIG. 8 is the verification result co-trained using all of the feature sets in FIG. 5 (e.g., feature sets corresponding to all subjects or raw sensing data). Cluster training (corresponding to FIG. 6, FIG. 7) is superior to co-training (corresponding to FIG. 8) in accuracy, sensitivity, and specificity. Taking the accuracy as an example, under co-training, the accuracy shown in FIG. 8 converges at around 0.7. However, under cluster training, the accuracy shown in FIG. 6 and FIG. 7 may converge at above 0.7. The accuracy of FIG. 6 for only the same data group may even converge at around 0.9.

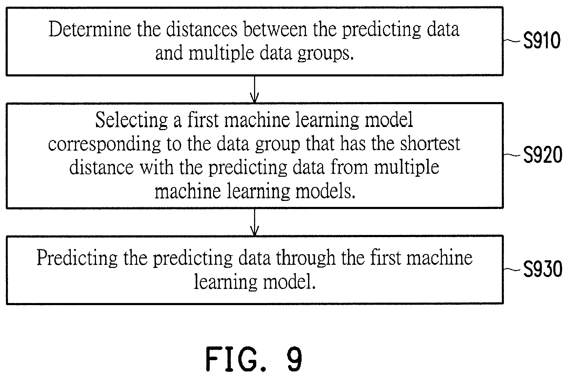

In addition to training optimization, embodiments of the disclosure may optimize model predictions. FIG. 9 is a flowchart of data prediction according to an embodiment of the disclosure. Referring to FIG. 9, the processor 12 may determine the distances between the predicting data and the data groups (step S910). Specifically, the processor 12 may first obtain the predicting data. For the predicting data, reference may be made to the description of the aforementioned sensing data, which is not repeated herein. As required, the processor 12 transforms the predicting data into a predicting feature set. The description of the feature conversion may refer to the aforementioned conversion of the sensing data to the feature set, which is not repeated herein. Next, the processor 12 determines the distances between the predicting feature set and the data groups.

For example, the representative values (e.g., mean, median, or other statistical value) of the first data group are [8.16, 9.8, 3.7, 15.54, 2.74, 4.04, 16.82, 4.56, 21, 11.88, 12.78 ,11.1, 9.54, 7.22, 7.24, 18.34, 17.04, 4.24, 20, 12.1, 13.16], the representative values of the second data group are [4.61, 6.42, 9.95, 5.7, 4, 6.61, 2.85, 10.28, 21, 15.85, 14.66, 12.047, 8.28, 10.38, 9.95, 18.85, 16.42, 3.57, 20, 13.33, 16.09], and the predicting feature set is [10, 13, 6, 16, 2, 3, 17, 5, 21, 9, 15, 12, 8, 7, 4, 19, 18, 1, 20, 11, 14]. Taking the Euclidean distance as an example, if the distance between the predicting feature set and the first data group is 7.855, then the distance between the predicting feature set and the second data group is 23.495.

The processor 12 may select a first machine learning model corresponding to the data group that has the shortest distance with the predicting data from multiple machine learning models (step S920), predict the predicting data through the first machine learning model (step S930). For example, 7.855 is less than 23.495, so the data group that has the shortest distance with the predicting feature set is the first data group. The processor 12 may load the first machine learning model of the first data group, and input the predicting data into the loaded first machine learning model to predict the prediction result. If the prediction data takes the sensing result of radar as an example, the prediction result may be a sleep event. However, the prediction result may still be changed according to actual demand.

It should be noted that, in an embodiment, in response to the fact that the distances between multiple data groups and the predicting data are less than the lower limit of the distance or greater than the upper limit of the distance, the machine learning models of the data groups may all be selected to predict the result of the predicting data. In another embodiment, in response to the fact that the distances between the data groups and the predicting data are the same, or the distances are smaller than a preset value, the processor 12 may load the machine learning model co-trained by the data groups for prediction.

To sum up, in the data predicting method and apparatus according to the embodiments of the disclosure, the feature set is normalized according to the result of dimensionality reduction, which is further clustered. Next, different machine learning models are trained using different data groups. In addition, machine learning models corresponding to data groups with similar distances are selected for prediction. Thereby, the effect of training and prediction may be improved.

## Claims

1. A data predicting method, **characterized in that** the data predicting method comprises:
determining a plurality of distances between predicting data and a plurality of data groups;
selecting a first machine learning model corresponding to one of the data groups having a shortest distance with the predicting data from a plurality of machine learning models; and
predicting a prediction result corresponding to the predicting data through the first machine learning model, wherein the machine learning models are respectively trained based on different data groups.

2. The data predicting method according to claim 1, **characterized by** further comprising:
executing a dimensionality reduction analysis on a plurality of feature sets to obtain an analysis result, wherein each of the feature sets comprises a plurality of features;
normalizing the feature sets according to the analysis result to generate a plurality of normalized feature sets;
generating a distance relationship of the normalized feature sets, wherein the distance relationship comprises a distance between two of the normalized feature sets;
clustering the feature sets according to the distance relationship to generate the data groups, wherein each of the data groups comprises the feature set; and
respectively training the machine learning models through the data groups.

3. The data predicting method according to claim 2, **characterized in that** the dimensionality reduction analysis is principal components analysis, named PCA, or principal co-ordinates analysis, named PCoA, the analysis result comprises proportions of a plurality of principal components (PC1∼PC11), and normalizing the feature sets according to the analysis result comprises:
selecting a first principal component from the principal components (PC1~PC1 1); and
normalizing the feature sets according to the first principal component.

4. The data predicting method according to claim 3, **characterized in that**
the first principal component is a principal component with highest proportion among the principal components (PC1~PC11); or
the first principal component is the principal component with the highest proportion or a principal component with second highest proportion among the principal components (PC1~PC11), a difference between the principal component with the highest proportion and the principal component with the second highest proportion is less than a threshold value.

5. The data predicting method according to claim 2, **characterized in that** the distance relationship is a distance matrix, and each element in the distance matrix is a distance between the features in two of the normalized feature sets.

6. The data predicting method according to claim 2, **characterized in that** clustering the feature sets according to the distance relationship comprises:
clustering the feature sets with the smallest distance relationship into one of the data groups according to the distance relationship through a hierarchical clustering;
determining a group number of the data groups;
determining a cluster distance according to the group number; and
clustering the feature sets according to the cluster distance.

7. The data predicting method according to claim 2, **characterized by** further comprising:
transforming a plurality of sensing data into the feature sets, wherein the sensing data is time-dependent data; and
training a corresponding machine learning model based on the feature sets or the sensing data corresponding to each of the data groups.

8. The data predicting method according to claim 7, **characterized in that** each of the sensing data is a sensing result of a radar.

9. A data predicting apparatus (10), comprising:
a memory (11), storing program code; and
a processor (12), **characterized in that** the processor (12) loads the program code for executing:
determining distances between predicting data and a plurality of data groups;
selecting a first machine learning model corresponding to one of the data groups having a shortest distance with the predicting data from a plurality of machine learning models; and
predicting a prediction result corresponding to the predicting data through the first machine learning model, wherein the machine learning models are respectively trained using different data groups.

10. The data predicting apparatus (10) according to claim 9, **characterized in that** the processor (12) further executes:
executing a dimensionality reduction analysis on a plurality of feature sets to obtain an analysis result, wherein each of the feature sets comprises a plurality of features;
normalizing the feature sets according to the analysis result to generate a plurality of normalized feature sets;
generating a distance relationship of the normalized feature sets, wherein the distance relationship comprises a distance between two of the normalized feature sets;
clustering the feature sets according to the distance relationship to generate the data groups, wherein each of the data groups comprises the feature sets; and
respectively training the machine learning models through the data groups.

11. The data predicting apparatus (10) according to claim 10, **characterized in that** the dimensionality reduction analysis is principal components analysis, named PCA, or principal co-ordinates analysis, named PCoA, the analysis result comprises proportions of a plurality of principal components (PC1~PC11), and the processor (12) further comprises:
selecting a first principal component from the principal components (PC1∼PC11); and
normalizing the feature sets according to the first principal component.

12. The data predicting apparatus (10) according to claim 11, **characterized in that**
the first principal component is a principal component with highest proportion among the principal components (PC1~PC11); or
the first principal component is the principal component with the highest proportion or a principal component with second highest proportion among the principal components (PC1-PC11), a difference between the principal component with the highest proportion and the principal component with the second highest proportion is less than a threshold value.

13. The data predicting apparatus (10) according to claim 10, **characterized in that** the distance relationship is a distance matrix, and each element in the distance matrix is a distance between features in two of the normalized feature sets.

14. The data predicting apparatus (10) according to claim 10, **characterized in that** the processor (12) further executes:
clustering the feature sets with the smallest distance relationship into one of the data groups according to the distance relationship through a hierarchical clustering;
determining a group number of the data groups;
determining a cluster distance according to the group number; and
clustering the feature sets according to the cluster distance.

15. The data predicting apparatus (10) according to claim 14, **characterized in that** the processor (12) further executes:
transforming a plurality of sensing data into the feature sets, wherein the sensing data is time-dependent data; and
training a corresponding machine learning model based on the feature sets or the sensing data corresponding to each of the data groups.
